# EUROPEAN PATENT APPLICATION

(11) **EP 3 346 561 A1**
(43) Date of publication of application: **11.07.2018**
(21) Application number: 15903008.9
(22) Date of filing: 02.09.2015
(51) Int. Cl.: H02B 1/20

(54) **CONTROL CENTER**

(71) Applicant: Mitsubishi Electric Corporation, Chiyoda-ku Tokyo 100-8310 (JP)
(72) Inventor: DESHIMARU, Yasukazu, Tokyo 100-8310 (JP)
(74) Representative: Sajda, Wolf E.
(86) International application number: PCT/JP2015/074934
(87) International publication number: WO 2017/037888

(57) **Abstract**

To achieve an improvement in maintainability of load side main circuit wiring or control circuit wiring of a power distributor,
a control center has control units (12) housed in multiple lines and on multiple levels of a frame, a vertical bus (14), and a power distributor (1) that distributes and supplies power from the vertical bus (14)to the control units (12), wherein the power distributor(1)is provided for each group of a plurality of control units (12) in the same level, and has bus coupling means (3) that couples with the vertical bus (14), a plurality of power supply side main circuit coupling means (5) that supply power from the vertical bus (14) to a power supply side of the plurality of control units (12) via a built-in branch bus, a plurality of load side main circuit coupling means (6) connected to a load side of the control units (12), and control circuit coupling means (7) that supplies a control signal, and the load side main circuit coupling means (6) or control circuit coupling means (7) is provided so as to be individually attachable and detachable from a front face side of the frame in a state in which the power distributor (1) is mounted.

## Description

### Technical Field

The present invention relates to a control center, and in particular, relates to a control center including a power distributor that distributes power received from a bus to each control unit in a control center in which a plurality of control units are housed.

### Background Art

A control center is used in a power plant or the like, is connected by an electrical wire to each item of equipment such as a motor or lighting, distributes power to each item of equipment, and controls the equipment. Because of this, control units individually connected to each item of equipment by the wires, and a bus that supplies power to the control units, are housed in the control center. Power received from the bus is distributed to each control unit via a power distributor disposed inside the control center.

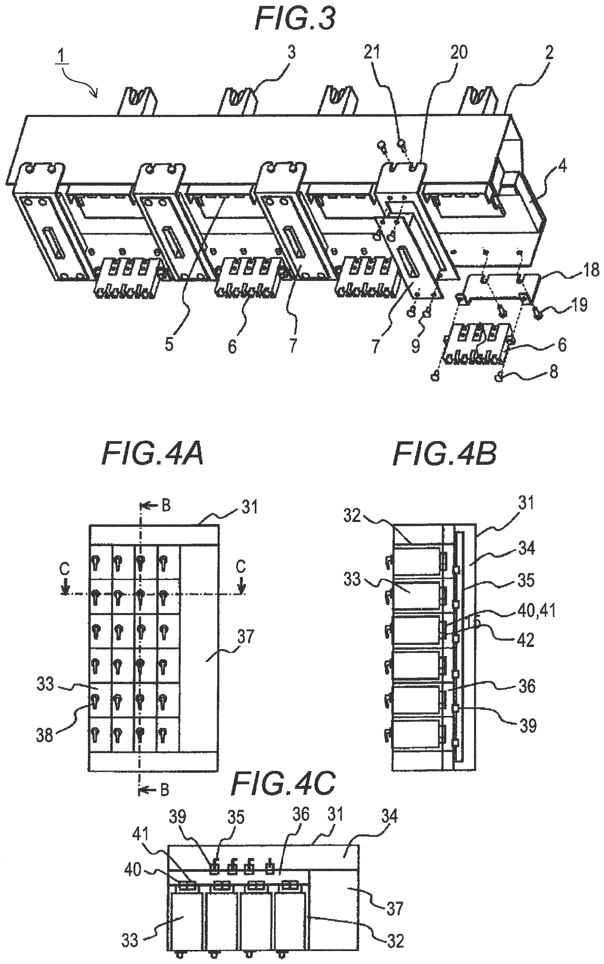

For example, the kind of configurations shown in FIGS. 4A to 4C are known as an existing control center including a power distributor. FIG. 4A is a front view, FIG. 4B is a side view seen from B-B of FIG. 4A, and FIG. 4C is a plan view seen from C-C of FIG. 4A.

As shown in the drawings, a plurality of control units 33 are housed in a unit chamber 32 on a front face side of a frame 31 of the control center. In the case of the drawings, a case of four lines and six levels is shown as an example. There is a bus chamber 34 on a back face side, and a three-phase, four-pole vertical bus 35 extending vertically is housed therein.

A power distributor 36 is disposed between the bus chamber 34 and unit chamber 32. One power distributor 36 is provided for the plurality of control units 33 housed on each level, and as there are six levels in the case of the drawings, six power distributors 36 are prepared.

Beside the unit chamber 32 there is a wiring chamber 37, in which is housed wiring (not shown) extending from the control unit 33 to external equipment.

An interrupting device, an electromagnetic switch (neither shown), and the like, are mounted in an interior of the control unit 33. Further, an operating handle 38 that switches the interrupting device between on and off is provided on a front face of the control unit 33.

A power supply side main circuit portion of the power distributor 36 includes bus coupling means 39 that uses a contactor for connecting to the vertical bus 35, a branch conductor (not shown), connected to the bus coupling means 39, that distributes power from the bus side to each control unit 33, and power supply side main circuit coupling means 40 for supplying power from the branch conductor to the control unit 33.

Also, a load side of the power distributor 36 includes load side main circuit coupling means 41 for outputting from each control unit 33 to an external load. A load side circuit is connected to external wiring, and power is supplied to each item of equipment, which is an external load.

Furthermore, the power distributor 36 includes control circuit coupling means 42 that supplies a control signal to the control unit 33 (for example, refer to Patent Document 1).

### Citation List

### Patent Literature

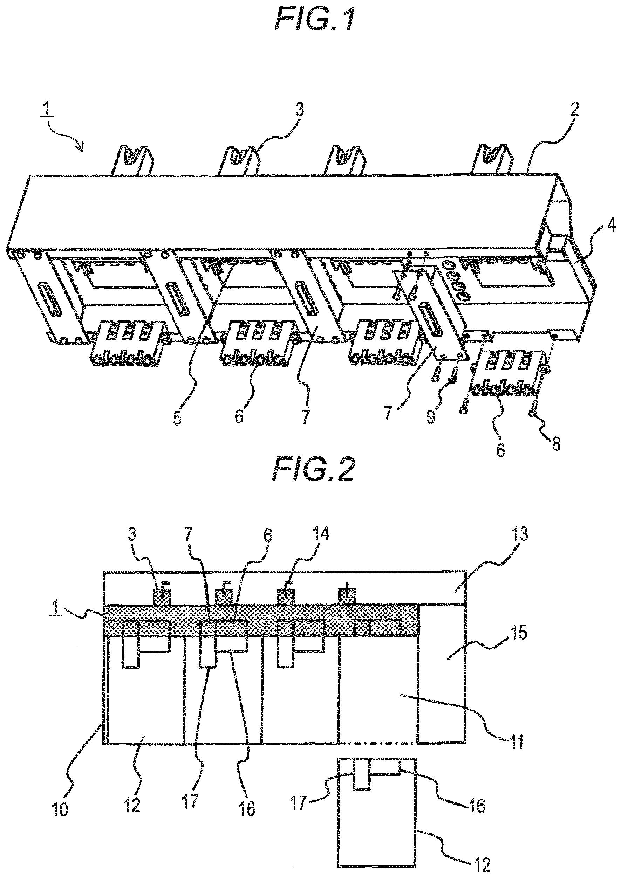

Patent Document 1: Japanese Patent JP 4 046 688 B2
(Claim 5, FIGS. 1 to 4)

### Summary of the Invention

### Technical Problem

In the kind of existing control center shown in Patent Document 1, the power distributor 36 is such that a plurality of the power supply side main circuit coupling means 40, load side main circuit coupling means 41, and control circuit coupling means 42 are provided in an interior of the power distributor 36 in accordance with a number of the control units 33 that are at the same height. In a state in which the power distributor 36 is mounted in the control center, the main circuit and control circuit coupling means cannot be attached or detached individually.

Because of this, in order to implement, for example, an inspection or maintenance operation on load side main circuit or control circuit wiring, or a modification operation accompanying a replacement or update of a control unit, it is necessary to remove the power distributor from the control center after removing all control units at the same height, and dismantle the power distributor.

Also, when removing the power distributor from the control center, all load side external wiring connected to the power distributor needs to be disconnected. In order to restore the control center to a usable state again, it is necessary to connect the external load side wiring, and insert the removed control units in the original positions, after mounting the power distributor, and an inspection accompanying assembly and wiring operations is necessary, because of which the operations require time and labor. Furthermore, depending on a wiring path, it is necessary to reconnect wiring other than wiring that is a target of the operation, and there is a problem in that an originally unnecessary wiring operation and inspection are unavoidable.

The invention, having been contrived in order to resolve the heretofore described kind of problem, has an object of improving maintainability of load side main circuit wiring and control circuit wiring of a power distributor, reducing operating time when carrying out a maintenance operation or modification operation, and reducing an operating target range.

### Solution to the Problem

A control center according to the invention is a control center including control units that can be pulled out housed in multiple lines and on multiple levels on a front face side of a frame,
a vertical bus disposed on a back face side, and
a power distributor that distributes power from the vertical bus to each control unit between the control unit and vertical bus, wherein the power distributor is provided for each group of a plurality of control units in the same level, and has bus coupling means that couples with the vertical bus, a branch bus that distributes power received in the bus coupling means to the plurality of control units, a plurality of power supply side main circuit coupling means connected to a power supply side of the plurality of control units and supplying distributed power to the plurality of control units, a plurality of load side main circuit coupling means connected to a load side of the plurality of control units, and a plurality of control circuit coupling means that supply a control signal to the plurality of control units, and the load side main circuit coupling means is provided so as to be individually attachable and detachable from the front face side of the frame in a state in which the power distributor is mounted.

Also, a configuration being the same as heretofore described, the control circuit coupling means is provided so as to be individually attachable and detachable from the front face side of the frame in a state in which the power distributor is mounted, instead of the structure wherein the load side main circuit coupling means is attached and detached.

### Advantageous Effects of the Invention

According to the control center of the invention, load side main circuit coupling means provided in a power distributor is provided so as to be individually attachable and detachable from a front face side of a frame in a state in which the power distributor is mounted, because of which, when implementing a maintenance operation or modification operation on the load side main circuit of the power distributor, the operation can be implemented from the front face side of the frame by removing only a control unit that is the target of the operation, with other control units housed at the same height in an inserted state, and with external wiring of the load side circuit remaining in a connected state. Because of this, an operating target range can be reduced, and an improvement in maintainability and reduction of operating time can be achieved.

Also, control circuit coupling means is provided so as to be individually attachable and detachable from the front face side of the frame in a state in which the power distributor is mounted, because of which, when implementing a maintenance operation or modification operation on the control circuit of the power distributor, the operation can be implemented from the front face side of the frame by removing only a control unit that is the target of the operation, with other control units housed at the same height in an inserted state, and with external wiring of the control circuit remaining in a connected state.

### Brief Description of the Drawings

- FIG. 1: is a perspective view showing portions of a power distributor of a control center according to a first embodiment of the invention.
- FIG. 2: is a diagram showing a relationship between the power distributor of the control center according to the first embodiment of the invention, a control center main body, and a control unit, and is a schematic view seen from above.
- FIG. 3: is a perspective view showing another example of a portion of the power distributor of the control center according to the first embodiment of the invention.
- FIG. 4A: is a front view,
- FIG. 4B: is a sectional side view, and
- FIG. 4C: is a sectional plan view of an existing control center.

### Description of Embodiments

### First Embodiment

FIG. 1 is a perspective view showing a power distributor used in a control center according to a first embodiment of the invention. Also, FIG. 2 is a schematic view seen from above for illustrating a relationship between the power distributor of the control center according to the first embodiment, a control center main body, and a control unit, and shows a portion corresponding to FIG. 4C.

As an overall view of the control center is equivalent to FIGS. 4A to 4C described in the Background Art, a depiction and description thereof are omitted.

As the invention is characterized particularly by a structure of the power distributor inside the control center, the following description will center on the power distributor.

As shown in FIG. 1, a power distributor 1 mounted in the control center includes bus coupling means 3 to be connected to a vertical bus 14 to be described hereafter, a branch bus case 4 in which a branch bus (not shown) is housed, power supply side main circuit coupling means 5, load side main circuit coupling means 6, and control circuit coupling means 7, in a power distributor frame 2.

Each portion will be described in further detail, while also referring to a schematic view seen from a plane of FIG. 2.

As shown in FIG. 2, the control center is such that a front face side (a lower side in the drawing) of a control center frame 10 seen in plan view is a unit chamber 11, and a plurality of control units 12 are housed here. The control units 12 are disposed in an orderly manner in multiple lines and multiple levels, as illustrated in FIG. 4A, and FIG. 2 shows a case in which four control units 12 are disposed on one level.

A back face side of the control center is a bus chamber 13 extending over a whole of the control center frame 10 in a height direction, and the vertical bus 14 is extended in a vertical direction. The vertical bus 14 is formed of three phases and four poles, has an L-shaped or I-shaped cross-section, and is connected by being fitted into the grip-form bus coupling means 3 of the power distributor 1.

The power distributor 1 of FIG. 1 is disposed between the bus chamber 13 and the unit chamber 11 in which the control unit 12 is housed. The power distributor 1 being a portion indicated by shading in FIG. 2, one power distributor 1 is disposed with respect to a group of a plurality of control units 12 housed on one level. In the case of the drawing, the power distributor 1 is provided for four control units 12, and the control center is equipped with a number of the power distributor 1 equivalent to the number of levels of control units 12.

A wiring chamber 15 is on a right-hand side of the control units 12, and wiring (not shown) and control wiring extending from the control units 12 to exterior equipment is housed therein.

Returning to FIG. 1, the power distributor 1 will be described in further detail.

In order to distribute three-phase power received from the bus coupling means 3 to each control unit 12, a branch bus, branching from the three-phase, four-pole bus coupling means 3, for distributing to the power supply side main circuit coupling means 5 in four places corresponding to the control units 12 is housed in the branch bus case 4 of the power distributor 1, but the branch bus does not appear in the drawing.

Flanges of which an end portion is bent into an L-shape are formed on a front face side of an upper portion and lower portion of the power distributor frame 2, and the load side main circuit coupling means 6 is attached by a mounting screw 8 to four places on the lower flange so as to be attachable and detachable. Also, the control circuit coupling means 7 is attached by a mounting screw 9 so as to be attachable and detachable, bridging the upper and lower flanges, on a left end as seen from the front face side and in places among the load side main circuit coupling means 6.

As shown in FIG. 2, the control unit 12 includes on a rear face side thereof a power supply side main circuit connector (not shown) that couples with the power supply side main circuit coupling means 5 of the power distributor 1, a load side main circuit connector 16 that couples with the load side main circuit coupling means 6, and a control circuit connector 17 that couples with the control circuit coupling means 7. As each control unit 12 can be attached to and detached from the respective coupling means portions, each control unit 12 can be pulled out to the front face side as a single unit. The control unit 12 on the far right side in FIG. 2 is shown in a state pulled out to the front face side.

In a state in which the power distributor 1 is mounted in the control center main body, power is received from the vertical bus 14 in an interior of the main body via the bus coupling means 3, and power distributed by the branch bus (not shown) disposed in an interior of the branch bus case 4 is supplied to each control unit 12 via the power supply side main circuit coupling means 5 and power supply side main circuit connector (not shown).

Further, power is supplied from each control unit 12 to external load equipment corresponding thereto via the load side main circuit coupling means 6 coupled to the load side main circuit connector 16 of each control unit 12.

Also, by the control circuit connector 17 of the control unit 12 and the control circuit coupling means 7 of the power distributor 1 being connected, the control circuit of each control unit 12 is connected to an external device, another control unit 12, or various kinds of meter, information and a signal of each control unit 12 are output to the exterior, and information and a signal from the exterior are input, whereby each control unit 12 can be controlled.

A characteristic portion of the invention is that the load side main circuit coupling means 6 and control circuit coupling means 7 are attached by the mounting screws 8 and 9 to the power distributor frame 2 so as to be attachable and detachable.

The structure is such that by the mounting screw 8 being removed from the front face side of the control center, the load side main circuit coupling means 6 can be attached to and detached from the power distributor frame 2 by an operation from the front face side alone, and in the same way, the structure is such that by the mounting screw 9 being removed, the control circuit coupling means 7 can be attached to and detached from the power distributor frame 2 by an operation from the front face side alone.

In order to obtain this kind of structure easily, the coupling means are disposed dispersedly on the front face side of the power distributor 1.

According to this structure, the load side main circuit coupling means 6 in an arbitrary position can be attached and detached from the front face side of the control center by removing only the control unit 12 housed in the relevant position. Also, in the same way, the control circuit coupling means 7 in an arbitrary position can be attached and detached from the front face side of the control center by removing only the control unit 12 housed in the relevant position.

Because of this, even when implementing a control circuit maintenance operation or modification operation of the power distributor 1 connected to the arbitrary control unit 12, there is no need to remove another control unit 12 housed on the same level, that is, at the same height, as the control unit 12 on which the operation is implemented, and of course, the operation can be implemented without removing the power distributor 1 from the control center frame 10.

Consequently, time spent on a maintenance operation or modification operation can be reduced, and furthermore, although the existing kind of configurations of FIGS. 4A to 4C are such that load equipment connected to the control units 12 needs to be stopped in order to remove the power distributor and all control units housed at the same height, the invention is such that there is no need to remove the power distributor 1, or the control unit 12 other than the maintenance target, because of which a maintenance operation or modification operation can be implemented without stopping load equipment connected to the control unit 12.

The power supply side main circuit coupling means 5 of the power distributor 1 is not a target of the attaching and detaching structure. This is because the source side main circuit coupling means 5 is such that power is supplied, connected to all the power supply side main circuit coupling means 5, from the vertical bus 14 via the branch bus (not shown), because of which a maintenance operation cannot be carried out on one power supply side main circuit coupling means 5 individually in a state in which power is being supplied.

Next, a modified example of the power distributor will be described.

FIG. 3 is a perspective view showing another example of portions of the power distributor of the control center. An overall configuration of the control center is the same as FIG. 2, and the portions of the power distributor 1 are also basically the same as FIG. 1, because of which the same portions are shown with the same reference signs, and the description will center on differences.

As shown in FIG. 3, the load side main circuit coupling means 6 is attached to the power distributor frame 2 across a main circuit side mounting bracket 18. The main circuit side mounting bracket 18 is attached to a bottom face of the power distributor frame 2 using a mounting bolt 19, and the load side main circuit coupling means 6 is attached to the main circuit side mounting bracket 18 using the mounting screw 8.

In the same way, the control circuit side is such that, firstly, a control side mounting bracket 20 is attached by a mounting bolt 21 to upper and lower portions of the power distributor frame 2, and the control circuit coupling means 7 is attached to the control side mounting bracket 20 using the mounting screw 9.

In a state in which the control center is assembled by the power distributor 1 being mounted in the control center frame 10, the control unit 12 being housed in the front unit chamber 11, and each coupling means portion being connected and wired, as illustrated in FIG. 2, power is received from the vertical bus 14, the power is distributed and supplied to each control unit 12 by the branch bus housed in the interior of the branch bus case 4, and the power is supplied to each load via the load side main circuit coupling means 6.

By employing the configuration of the kind of power distributor 1 of FIG. 3, the load side main circuit coupling means 6 can be attached and detached by an operation from the front face side of the control center alone by removing the mounting screw 8. Also, the main circuit side mounting bracket 18 can be attached and detached by an operation from the front face side of the control center alone by loosening the mounting bolt 19.

In the same way, the control circuit coupling means 7 can be attached and detached by an operation from the front face side of the control center alone by removing the mounting screw 9, and the control side mounting bracket 20 can be attached and detached by an operation from the front face side of the control center alone by loosening the mounting bolt 21.

Consequently, in addition to the same advantages as FIG. 1, for example, even when a form dimension of the load side main circuit coupling means 6 or control circuit coupling means 7 changes because of a change in specifications of external equipment connected to the control unit 12, or the like, the change can be responded to by replacing the coupling means along with the mounting bracket.

In the description thus far, both the load side main circuit coupling means 6 and control circuit coupling means 7 can be attached and detached from the front face side of the control center, but a structure such that at least one can be attached and detached by an operation from the front face side alone may also be adopted.

In this case, too, a portion of coupling means that can be attached and detached is easily maintained, and time spent on a maintenance operation or modification operation can be reduced.

Also, a configuration may be such that the structures shown in FIG. 1 and FIG. 3 are combined, and one of the load side main circuit coupling means 6 and control circuit coupling means 7 is attached using a mounting bracket.

According to the control center of the first embodiment, as heretofore described, the control center includes control units that can be pulled out housed in multiple lines and on multiple levels on a front face side of a frame, a vertical bus disposed on a back face side, and a power distributor that distributes power from the vertical bus to each control unit between the control unit and vertical bus.

The power distributor is provided for each group of a plurality of control units in the same level, and has bus coupling means that couples with the vertical bus, a branch bus that distributes power received in the bus coupling means to the plurality of control units, a plurality of power supply side main circuit coupling means connected to a power supply side of the plurality of control units and supplying distributed power to the plurality of control units, a plurality of load side main circuit coupling means connected to a load side of the plurality of control units, and a plurality of control circuit coupling means that supply a control signal to the plurality of control units.

The load side main circuit coupling means is provided so as to be individually attachable and detachable from the front face side of the frame in a state in which the power distributor is mounted, because of which, when implementing a maintenance operation or modification operation on the load side main circuit of the power distributor, the operation can be implemented from the front face side of the frame by removing only the control unit that is the target of the operation, with other control units housed at the same height in an inserted state, and with external wiring of the load side circuit remaining in a connected state.

Because of this, an operating target range can be reduced, and an improvement in maintainability and reduction of operating time can be achieved.

Also, the control center being a control center having a power distributor configured in practically the same way as heretofore described, the control circuit coupling means is provided instead of the load side main circuit coupling means so as to be individually attachable and detachable from the front face side of the frame in a state in which the power distributor is mounted, because of which, when implementing a maintenance operation or modification operation on the control circuit of the power distributor, the operation can be implemented from the front face side of the frame by removing only the control unit that is the target of the operation, with other control units housed at the same height in an inserted state, and with external wiring of the control circuit remaining in a connected state. Because of this, an operating target range can be reduced, and an improvement in maintainability and reduction of operating time can be achieved.

The embodiment can be changed or abbreviated as appropriate, without departing from the scope of the invention.

### List of Reference Signs

- 1: Power distributor
- 2: Power distributor frame
- 3: Bus coupling means
- 4: Branch bus case
- 5: Power supply side main circuit coupling means
- 6: Load side main circuit coupling means
- 7: Control circuit coupling means
- 8: Mounting screw
- 9: Mounting screw
- 10: Control center frame
- 11: Unit chamber
- 12: Control unit
- 13: Bus chamber
- 14: Vertical bus
- 15: Wiring chamber
- 16: Load side main circuit connector
- 17: Control circuit connector
- 18: Main circuit side mounting bracket
- 19: Mounting bolt
- 20: Control side mounting bracket
- 21: Mounting bolt

## Claims

1. A control center, comprising:
control units that can be pulled out housed in multiple lines and on multiple levels on a front face side of a frame;
a vertical bus disposed on a back face side; and
a power distributor that distributes power from the vertical bus to each control unit between the control unit and vertical bus, wherein
the power distributor is provided for each group of a plurality of control units in the same level, and has
bus coupling means that couples with the vertical bus,
a branch bus that distributes power received in the bus coupling means to the plurality of control units,
a plurality of power supply side main circuit coupling means connected to a power supply side of the plurality of control units and supplying distributed power to the plurality of control units,
a plurality of load side main circuit coupling means connected to a load side of the plurality of control units,
and a plurality of control circuit coupling means that supply a control signal to the plurality of control units, and
the load side main circuit coupling means is provided so as to be individually attachable and detachable from the front face side of the frame in a state in which the power distributor is mounted.

2. A control center, comprising:
control units that can be pulled out housed in multiple lines and on multiple levels on a front face side of a frame;
a vertical bus disposed on a back face side; and
a power distributor that distributes power from the vertical bus to each control unit between the control unit and vertical bus, wherein
the power distributor is provided for each group of a plurality of control units in the same level, and has
bus coupling means that couples with the vertical bus,
a branch bus that distributes power received in the bus coupling means to the plurality of control units,
a plurality of power supply side main circuit coupling means connected to a power supply side of the plurality of control units and supplying distributed power to the plurality of control units,
a plurality of load side main circuit coupling means connected to a load side of the plurality of control units,
and a plurality of control circuit coupling means that supply a control signal to the plurality of control units, and
the control circuit coupling means is provided so as to be individually attachable and detachable from the front face side of the frame in a state in which the power distributor is mounted.
